# EUROPÄISCHE PATENTSCHRIFT

(11) **EP 0 531 470 B1**
(45) Veröffentlichungstag und Bekanntmachung des Hinweises auf die Patenterteilung: **13.12.1995**
(21) Anmeldenummer: 92904973.2
(22) Anmeldetag: 19.02.1992
(51) Int. Cl.: B60T 8/48

(54) **KRAFTFAHRZEUGBREMSANLAGE MIT BREMSSCHLUPF- UND ANTRIEBSSCHLUPFABHÄNGIGER REGELUNG DES BREMSDRUCKES**
MOTOR VEHICLE BRAKING SYSTEM WITH BRAKE SLIP AND DRIVE SLIP-DEPENDENT CONTROL OF THE BRAKING PRESSURE
DISPOSITIF DE FREINAGE DE VEHICULES A MOTEUR A REGULATION DE LA PRESSION DE FREINAGE EN FONCTION DU PATINAGE AU FREINAGE ET A L'ENTRAINEMENT

(30) Priorität: 04.04.1991 DE 4110851
(43) Veröffentlichungstag der Anmeldung: 17.03.1993
(73) Patentinhaber: ITT Automotive Europe GmbH, 60488 Frankfurt (DE)
(72) Erfinder: BURGDORF, Jochen, D-6050 Offenbach (DE)
(86) Internationale Anmeldenummer: EP9200346
(87) Internationale Veröffentlichungsnummer: WO9217357

(56) Entgegenhaltungen:
- DE-A- 3 635 846
- DE-A- 3 700 461
- DE-C- 3 900 852
- FR-A- 2 645 096
- GB-A- 2 165 905
- GB-A- 2 168 771

## Beschreibung

Die vorliegende Erfindung geht von einer Kraftfahrzeugbremsanlage gemäß dem Oberbegriff des Anspruches 1 aus. Eine gattungsgemäße Bremsanlage ist aus der DE-OS 36 35 846 bekannt. Darin wird zur Minimierung der zur Antriebsschlupfregelung nötigen Ventile vorgeschlagen, in den Verbindungen vom Druckmittelvorratsbehälter zum Tandemhauptzylinder jeweils ein Absperrventil vorzusehen, sofern der dieser Verbindung zugehörige Bremskreis ein angetriebenes Rad aufweist. Während einer Antriebsschlupfregelphase werden die Absperrventile geschlossen, und über eine Pumpe wird im Bremskreis des angetriebenen Rades Druck aufgebaut. Ein Entweichen des Druckmittels in den Vorratsbehälter wird dabei vom Absperrventil verhindert. Das heißt, daß bei Einachsantrieb und einer Vorderachs- Hinterachs-Bremskreisaufteilung nur ein solches Ventil benötigt wird, nämlich für den Bremskreis der angetriebenen Achse. Für allradangetriebene Fahrzeuge sowie für Fahrzeuge für diagonaler Bremskreisaufteilung reicht ein Ventil nicht aus, da beide Bremskreise angetriebene Räder aufweisen. Die Anordnung und Zahl der benötigten Ventile hängt also von der Zahl der angetriebenen Räder sowie der Aufteilung der Bremskreise ab.

Der vorliegenden Erfindung liegt die Aufgabe zugrunde, eine Bremsanlage zu schaffen, die sich mit einer einheitlichen Anordnung und mit einer minimalen Anzahl von Absperrventilen für alle Arten der Bremskreisaufteilung in gleicher Weise zur Antriebsschlupfregelung eignet, unabhängig davon, ob die Radbremszylinder der angetriebenen Räder von einer gemeinsamen Druckkammer gespeist werden oder nicht.

Diese Aufgabe wird durch den kennzeichnenden Teil des Anspruches 1 gelöst.

Zu Beginn einer Antriebsschlupfregelung muß die betreffende Radbremse mit Druckmittel gefüllt werden. Durch die Nutzung der Schwimmkolbenfunktion kann ein zweites Absperrventil entfallen, da wie bei einer Normalbremsung durch den zurückgelegten Schwimmkolbenhub der Anschluß des Druckmittelvorratsbehälters zum Sekundärbremskreis gesperrt wird, so daß der Druckverlauf im Sekundärbremskreis entsprechend dem des Primärbremskreises gesteuert wird. Dabei bleiben die Bremskreise durch die Druckübertragung allein über den Schwimmkolben separat, solange sie unter Druck stehen.

Es sind zwar auch Vorschläge bekannt, in den Raum vor den beiden Druckkammern des Tandemhauptzylinders oder ggf. in den hydraulischen Bremskraftverstärker (GB 2 168 771 A) Druckmittel einströmen zu lassen und in beiden Bremskreisen die Verbindung zum Druckmittelvorratsbehälter über die zwei vorhandenen von den Kolbenwegen gesteuerten Ventile im Tandemhauptzylinder zu kontrollieren. Diese Schaltung hätte aber Auswirkungen auf das Bremspedal und würde den Fahrer im Falle einer plötzlichen Einbremsung irritieren.

Zur erfindungsgemäßen Lösung der Aufgabenstellung sind sowohl Tandemhauptzylinder mit sogenannten Zentralventilen als auch solche geeignet, die mit Dichtungsmanschetten ausgerüstet sind, über welche das Druckmittel in die Bremskreise einströmt.

Das erfindungsgemäße Prinzip ist nicht auf sogenannte offene Systeme eingeschränkt, sondern kann auch auf geschlossene oder Plungersysteme angewandt werden. Das heißt, daß die Erfindung unabhängig davon funktioniert, mit welcher Einrichtung - beispielsweise Pumpen oder Kolben - der Druckabbau oder -Aufbau bei einer Bremsschlupfregelung vorgenommen wird.

Dabei gibt es prinzipiell immer die Möglichkeit, zum Druckaufbau im Primärkreis bei der Antriebsschlupfregelung eine zusätzliche Pumpe oder einen anderen Druckerzeuger hinzuzuziehen, so daß ein komplettes Antiblockiersystem durch Addition einiger weniger Funktionselemente mit einer zusätzlichen Antriebsschlupfregelfunktion ausgestattet werden kann. Der Einfachheit halber und aus Kostengründen ist es aber manchmal vorteilhaft, eine ohnehin für die Blockierschutzregelung vorhandene Pumpe oder dergleichen auch zum Druckaufbau zu Beginn einer Antriebsschlupfregelung zu verwenden.

Weitere vorteilhafte Merkmale ergeben sich aus der folgenden Beschreibung von vier Ausführungsbeispielen anhand von Zeichnungen.

Es zeigt:
- Fig. 1: eine besonders einfache erfindungsgemäße Ausführung einer Bremsanlage mit offenem System,
- Fig. 2: eine erfindungsgemäße Ausführung eines Plungersystems mit einer zusätzlichen Pumpe,
- Fig. 3: eine Ausführung eines geschlossenen Bremssystems mit zusätzlicher, selbst ansaugender Pumpe für die Antriebsschlupfregelung,
- Fig. 4: eine besonders einfache Ausführung eines geschlossenen Systmes mit Nutzung einer selbstansaugenden ABS-Pumpe auch zur Antriebsschlupfregelung.

In allen Figuren ist eine diagonale Bremskreisaufteilung dargestellt. Bei anderen Aufteilungen ist der Aufbau völlig analog, wobei jeweils bei der Antriebsschlupfregelung nur in Radbremsen angetriebener Räder Druckmittel eingelassen wird.

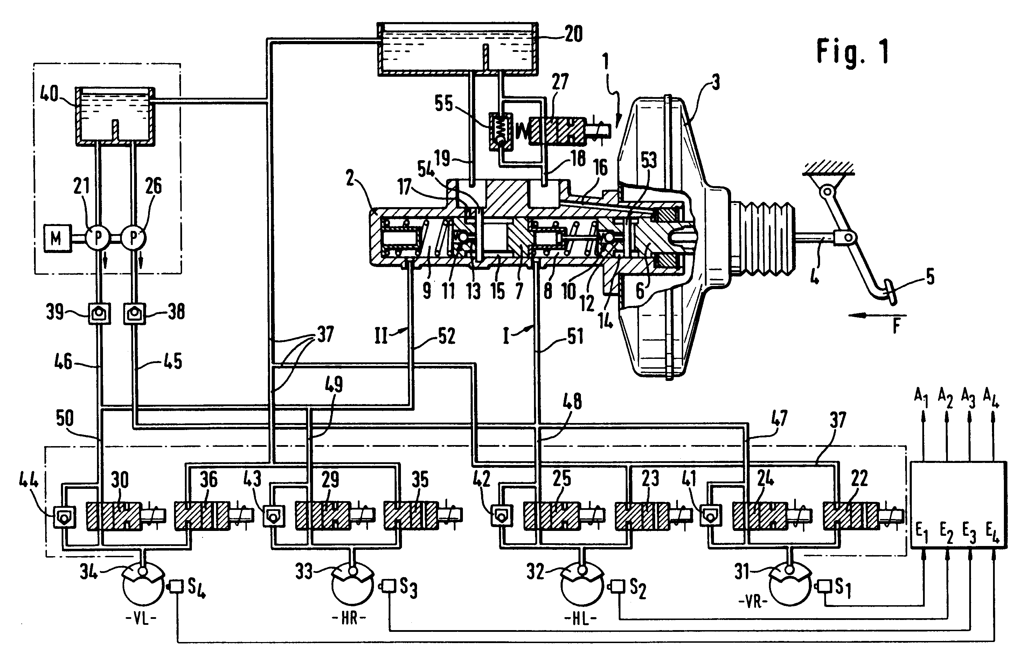

Die in Fig. 1 dargestellten Bremsanlage besitzt einen Bremsdruckgeber 1, der im wesentlichen aus einem Tandemhauptzylinder 2 und einem Unterdruckverstärker 3 besteht. Über die Druckstange 4 wird in bekannter Weise die auf das Bremspedal 5 ausgeübte Pedalkraft F auf den Unterdruckverstärker 3 und von diesem hilfskraftunterstützt auf den Primärkolben 6, sowie durch den Druck in der ersten Druckkammer 8 auf den Schwimmkolben 7 des Tandemhauptzylinders 2 übertragen.

In der gezeigten Lösestellung der Bremse sind die Druckkammern 8 und 9 des Tandemhauptzylinders 2 über offene Zentralregelventile 10 und 11, über Anschlußkanäle 12 und 13 im Innern der Kolben 6 und 7 sowie schließlich über Ringkammern 14 und 15, über Anschlußbohrungen 16 und 17 sowie über hydraulische Leitungen 18 und 19 mit einem Druckmittelvorratsbehälter 20 verbunden.

Die beiden Bremskreise I und II des Tandemhauptzylinders 2 sind über elektromagnetisch betätigbare, stromlos offene Einlaßventile 24 und 25 bzw. 29 und 30 mit den Radbremsen 31,32,33, und 34 verbunden. Die parallel geschalteten Radbremsen 31 und 32 bzw. 33 und 34 sind den Diagonalen zugeordnet. Die Radbremsen 31,32,33 und 34 sind außerdem an elektromagnetisch betätigbare, stromlos geschlossene Auslaßventile 22 und 23 bzw. 35 und 36 angeschlossen, die über eine hydraulische Rückflußleitung 37 mit den Druckmittelbehältern 20 und 40 in Verbindung stehen. Vom Druckmittelbehälter 40 werden zwei elektromotorisch (Motor M) angetriebene Hydraulikpumpen 21 und 26 mit Druckmittel versorgt.

Die Fahrzeugräder sind mit induktiven Sensoren S₁ bis S₄ ausgerüstet, die das Raddrehverhalten, d.h. die Radgeschwindigkeit und Änderungen derselben erkennen lassen. Diese Signale werden über die Eingänge S₁ bis S₄ einer elektronischen Signalverarbeitungs- und Verknüpfungsschaltung 28 zugeführt, die Bremsdrucksteuersignale erzeugt, mit denen beim Erkennen einer Blockiertendenz die Einlaß- und Auslaßventile 22,23,24,25,29,30,35 und 36 zeitweise umgeschaltet werden, wodurch der Bremsdruck konstant gehalten, abgebaut oder erhöht werden kann. Über die Ausgänge A₁ bis A₄ werden hierzu die Betätigungsmagnete der Einlaß- und Auslaßventile angesteuert. Die Signalverarbeitungs- und Verknüpfungsschaltung 28 steuert ebenfalls das Absperrventil 27.

Die Bremsanlage arbeitet wie folgt:
Bei Bremsbetätigung wird die Pedalkraft F unterstützt durch den Unterdruck im Verstärker 3, auf die Hauptzylinderkolben 6 und 7 übertragen. Die Zentralregelventile 10 und 11 schließen, so daß sich nunmehr in den Druckkammern 8 und 9 und damit in den Bremskreisen I und II Bremsdruck aufbauen kann, der über die Ventile 24 und 25 bzw. 29 und 30 zu den Radbremsen 31 und 32 bzw. 33 und 34 gelangt.

Wird nun mittels der für die Sensoren S₁ bis S₄ und der Schaltung 28 eine Blockiertendenz an einen oder mehreren Rädern erkannt, setzt die Schlupfregelung ein. Der Antriebsmotor M der Pumpen 21 und 26 wird eingeschaltet, wobei sich in den beiden Einströmleitungen 45 und 46 ein Druck aufbaut, der einerseits über die Rückschlagventile 38 und 39 und die Zweigleitungen 47 und 48 bzw. 49 und 50 und über die Einlaßventile 25 und 26 bzw. 29 und 30 auf die Radzylinder der Radbremsen 31 bis 34 einwirkt und andererseits die Druckkammern 8 und 9 des Hauptzylinders 2 beaufschlagt.

Ein Signal der Schaltung 28 führt zur Umschaltung der elektromagnetisch betätigbaren Einlaßventile 24 und 25 bzw. 29 und 30 und damit zum Absperren der Bremkreise I und II bzw. der Zweigleitungen 47 bis 50. Eine weitere Verschiebung der Hauptzylinderkolben 6 und 7 in Richtung der Pedalkraft F sowie eine Entleerung der Druckkammern 8 und 9 wird verhindert, da nunmehr das Druckmittel von den Pumpen 21 und 26 über die Versorgungsleitungen 45 und 46, die geöffneten Rückschlagventile 38 und 39 sowie die Hauptbremsleitungen 51 und 52 in die Druckkammern 8 und 9 einströmt und die Kolben 6 und 7 in ihre Ausgangsstellungen zurückdrückt. Der tatsächliche Bremsdruckverlauf in den Radbremsen 31 bis 34 wird durch die Einlaß- und Auslaßventile 22,23,24,25,29,30,35 und 36 festgelegt, denen über die Leitungen A₁ bis A₄ weitere schlupfregelende Bremsdrucksteuersignale zugeführt werden.

Wie aus der Zeichnung ersichtlich, sind die Einlaßventile 24 und 25 bzw. 29 und 30 noch durch parallelgeschaltete Rückschlagventile 41 und 42 bzw. 43 und 44 abgesichert. Diese Rückschlagventile 41 bis 44 ermöglichen in besonderen Fällen eine Beendigung der Bremsdruckregelung bzw. ein Lösen der Radbremsen, da bei noch geschlossenem Einlaßventile 24,25,29 und 30 und Auslaßventile 22,23,35 und 36 eine geringe Menge Druckmittel aus den Radbemsen 31 bis 34 in die Druckkammern 8 und 9 zurückströmen kann, wenn die Kolben 6 und 7 des Hauptzylinders 2 in die Ausgangsstellung zurückgeschoben sind und sich somit die Zentralregelvenile 10 und 11 in der Offenstellung befinden.

Die Zentralregelventilen bestehen aus jeweils einem in der Längsbohrung 6 bzw. 7 gelagerten Stößel, dessen pedalseitiges Ende an einem ortsfesten Bolzen 53 bzw. 54 anstößt, welcher die Ventilkugel in der Lösungstellung von ihrem Ventilsitz abhebt. Das Druckmittel kann in der gezeigten Ventilstellung aus den Druckkammern 8 bzw. 9 urch den Ringspalt zwischen Venilkugel und Ventilsitz vorbei in den Ringraum 14 bzw. 15 und von hier aus in den Kanal 16 bzw. 17 in den Druckmittelvorratsbehälter 20 zurückströmen. Sobald die Kolben 6 und 7 von der Fußkraft F in Pfeilrichtung aus der dargestellten Position verschoben werden, setzen sich die Ventilkugeln auf die Ventilsitze auf und verschließen damit die Zentralregelventile 10 und 11. Je nach Größe der Fußkraft F können diese eine Schnüffelstellung einnehmen, wobei die Kolben 6 und 7 sich zumindest teilweise von den Bolzen 53 bzw. 54 abheben.

Die hier beschriebene Bremsanlage ist für ein Fahrzeug für zwei Bremskreise mit diagonaler Bremskreisaufteilung vorgesehen. Im Falle eines drohenden Antriebsschlupfes werden die Pumpen 21 und 26 über die Signalverarbeitungsschaltung 28 eingeschaltet, so daß das Druckmittel in die Einströmleitungen 45 und 46 bzw. in die Bremsleitungen 51 und 52 und damit in die Druckkammern 8 und 9 des Hauptzylinders 2 gefördert wird, von wo aus das Druckmittel über die Zentralregelventile 10 und 11 sowie die Leitungen 18 und 19 in den Behälter 20 zurückströmen kann.

Beginnt nun beispielsweise während eines Beschleunigungsvorganges eines der Fahrzeugräder durchzudrehen, dann wird das Absperrventil 27 in seine Schließstellung geschaltet und zwar durch ein von der Signalverarbeitungsschaltung 28 erzeugtes elektrisches Signal. Nach dem Sperren der hydraulischen Leitung 18 kann sich nun im Bremskreis I der Pumpendruck aufbauen, da das von der Pumpe 26 geförderte Druckmittel nicht in den Behälter 20 abströmen kann. Durch diesen Druck setzt sich der Schwimmkolben 7 in Bewegung und regelt so über das Zentralregelventil 11 den Druck im Sekundärbremskreis II während das Überdruckventil 55 den Druck im Primärkreis begrenzt. Wird beispielsweise angenommen, daß das Fahrzeug einen Vorderradantrieb besitzt und sich das Fahrzeugrad VL (vorne links) im Anfahrschlupf befindet, so kann die zugeordnete Radbremse 34 über das auf Durchlaß geschaltete Einlaßventil 30 abgebremst werden, wozu gleichzeitig die Einlaßventile 24,25 und 29 sowie das Auslaßventil 36 in die Sperrstellung geschaltet werden müssen.

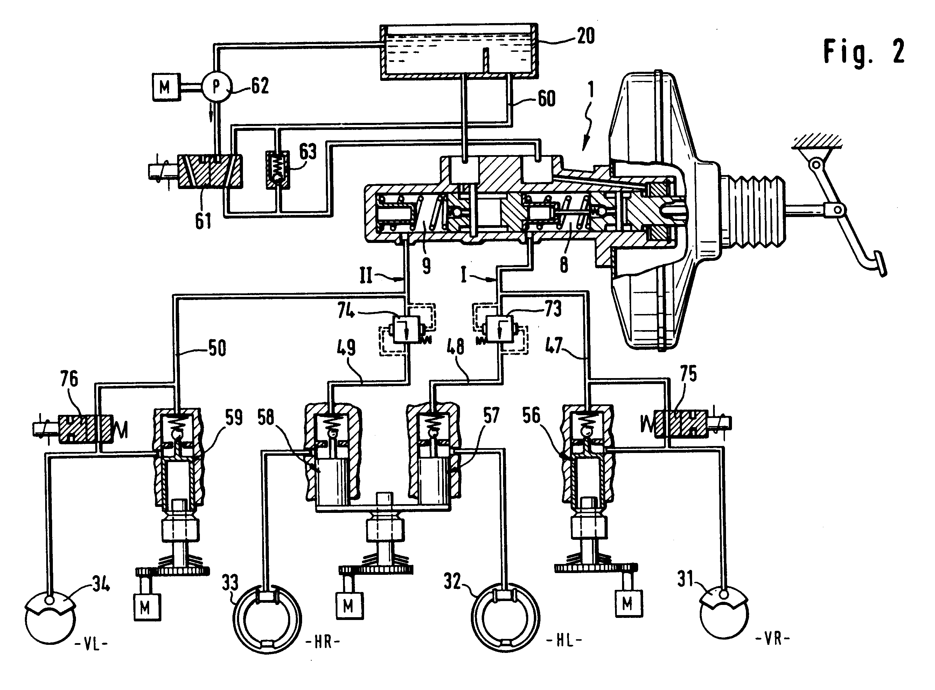

Die Bremsanlage nach Fig. 2 arbeitet nach dem sogenannten Plungerprinzip, d.h., daß, wenn während einer pedalbetätigten Bremsung Blockiergefahr besteht, elektromotorisch betriebene Kolbensysteme 56,57,58 und 59 durch Vergrößerung des Volumens der entsprechenden Zweigleitung den Bremsdruck in der betroffenen Radbremse senken. Die Blockierschutzregelung erfolgt also ohne Rückfluß von Druckmittel in den Druckmittelvorratsbehälter 20. Das Zentralventil 11 im Schwimmkolben 7 braucht hier keine Regelfunktion zu übernehmen und bleibt während des ganzen Bremsvorganges geschlossen.

Zur Antriebsschlupfregelung wurde hier in die Verbindungsleitung 60 vom Druckmittelvorratsbehälter 20 zur Druckkammer 8 ein 3/2-Wege-Absperrventil 61 eingebaut, welches, wenn es die Verbindungsleitung 60 sperrt, einen Anschluß von der zusätzlich in die Schaltung aufgenommenen, elektromotorisch angetriebenen Pumpe 62 zur Druckkammer 8 des Primärkreises I herstellt. Die Saugseite der Pumpe 62 ist mit dem Druckmittelvorratsbehälter 20 verbunden.

Die Zweigleitungen 48 und 49, die zu den Hinterradbremsen 32 und 33 führen, sind aus Sicherheitsgründen mit druckabhängig schaltenden Bremskraftreglern 73 und 74 ausgestattet, damit auch bei Ausfall der elektronisch gesteuerten Bremsdruckregelung der Hinterradbremsdruck gemindert wird, so daß die Hinterradbremsen keinesfalls vor den Vorderradbremsen blockieren.

Eine weitere Sicherheitseinrichtung stellt das dem Absperrventil 61 parallel geschaltete Überdruckventil 63 dar, das den Pumpendruck im Primärbremskeis begrenzt.

Das Fahrzeug mit der dargestellten Bremsanlage besitzt einen Hinterradantrieb. Deswegen weisen die Zweigleitungen 47 und 50 zu den Vorderradbremsen 31 und 34 jeweils ein stromlos offenes Trennventil 75 bzw. 76 auf, das während einer Antriebsschlupfregelung seine Sperrstellung einnimmt, so daß die Bremsen 31 und 34 der nicht angetriebenen Räder drucklos bleiben. Ansonsten ist das Prinzip der Antriebsschlupfregelung in dieser Bremsanlage wie das der in Fig. 1 dargestellten.

Da hier ein neuer Druckerzeuger zur Antriebsschlupfregelung hinzugefügt wird, ist die Wahl der Funktionsweise desselben beliebig. So kann beispielsweise an Stelle der Pumpe 62 ein vakuum- oder elektromotorisch betätigter Kolben Druckmittel vom Druckmittelvorratsbehälter 20 in die Kammer 8 schieben, da es sich nicht um ein offenes System handelt und das zuzuführende Volumen begrenzt ist.

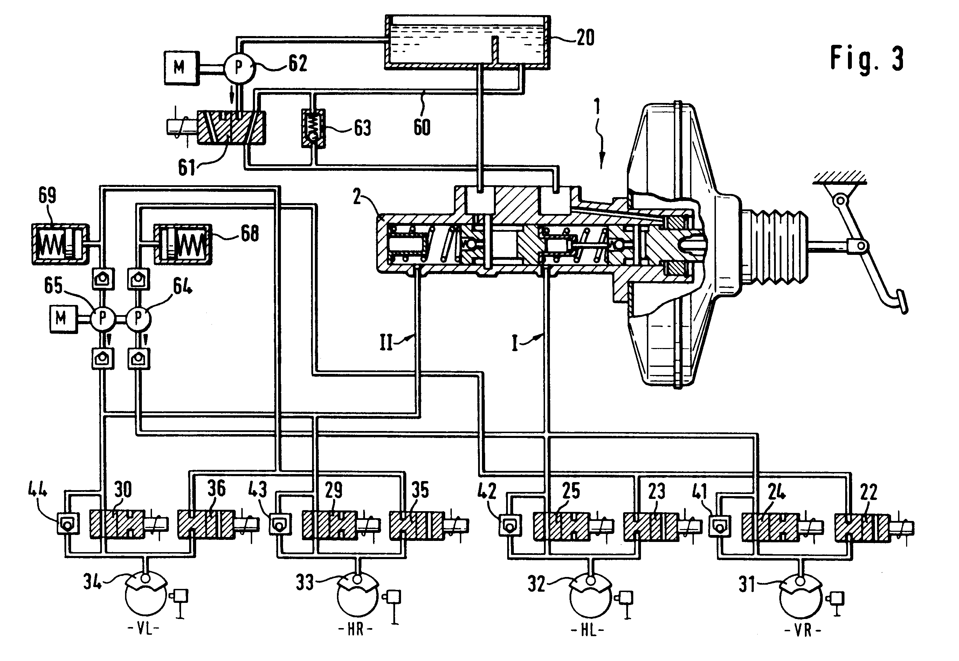

Die Bremsanlage gemäß Fig. 3 arbeitet nach dem Rückförderprinzip, ist also ein sogenanntes geschlossenes System. Während einer Blockierschutzregelung wird Druckmittel aus der betroffenen Radbremse in einen der Niederdruckspeicher 68 und 69 abgelassen. Von dort wird es von einer der Pumpen 64 und 65 wieder in den Bremskreis gepumpt. Druckaufbau-, Halte- und Abbauphase werden durch die Schaltstellungen der Einlaßventile 24,25,29 und 30 sowie der Auslaßventile 22,23,35 und 36 in bekannter Weise bestimmt. Da die Pumpen 64 und 65 im Niederdruckspeicher 68 bzw. 69 immer einen Vordruck vorfinden, ist dieses System mit sogenannten nicht selbstabsaugenden ABS-Pumpen ausgerüstet, die sich nicht dazu eignen, aus dem drucklosen Druckmittelvorratsbehälter 20 anzusaugen und in den Primärbremskreis I zu fördern. Zu diesem Zweck sind wie in diesem Beispiel zuvor eine zusätzliche selbstansaugende Pumpe 62, ein 2/3-Wegeventil als Absperrventil 61 und ein Überdruckventil 63 zwischen den Druckmittelvorratsbehälter 20 und der Kammer 8 des Tandemhauptzylinders 2 vorgesehen.

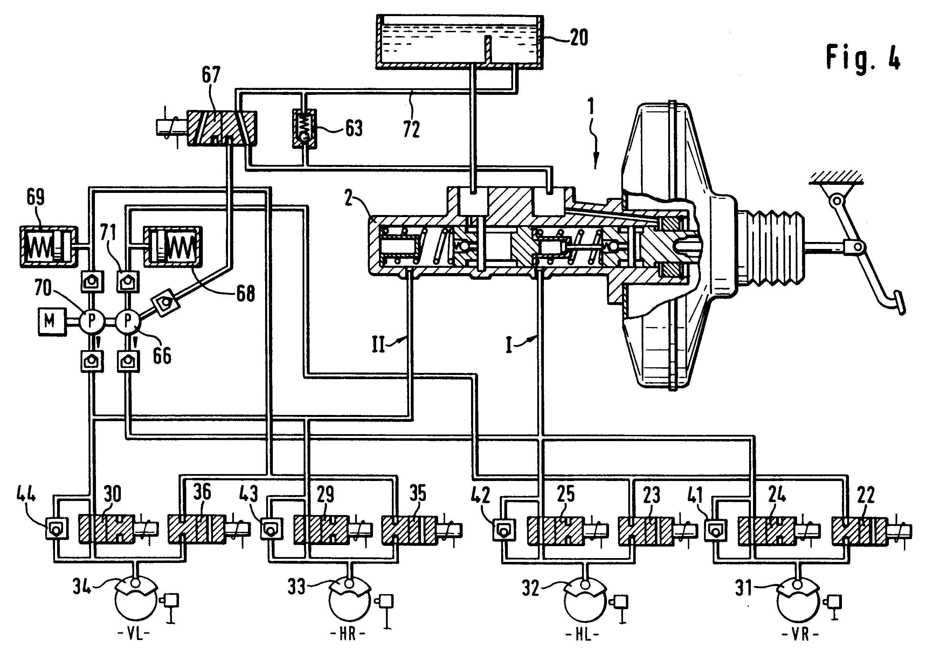

In Fig. 4 schließlich ist ebenfalls ein geschlossenes System dargestellt. Allerdings ist hier zumindest die ABS-Pumpe des Primärbremskreises I durch eine selbstansaugende Pumpe 66 ersetzt worden, die zugleich den Druckabbau bei der Antriebsschlupfregelung übernimmt.

Das Absperrventil 67, ein 2/3-Wegeventil, stellt in seinen zwei Schaltstellungen jeweils eine Verbindung 72 vom Druckmittelvorratsbehälter 20 entweder zur Druckkammer 8 oder zur Saugseite der Pumpe 66 her, die mit einem zweiten Sauganschluß mit dem Niederdruckspeicher 68 in Verbindung steht. Die Pumpe 70 fördert in bekannter Weise nur aus dem Niederdruckspeicher 69 in den Sekundärbremskreis II.

Die Verwendung der selbstansaugenden Pumpe 66 im geschlossenen System legt nahe, als Saugventile 71 ein Rückschlagventil zu wählen, dessen Vordruck über den Atmosphärendruck liegt, um einer Unterdruckbildung in den Radbremsen 31 und 32 vorzubeugen.

In dieser Schaltung sind angetriebene und nicht angetriebene Räder nicht zu unterscheiden, da für alle Radbremsen 31 bis 34 wie in Fig. 1 jeweils ein Einlaßventil 24,25,29 bzw. 30 und ein Auslaßventil 22,23,35 bzw. 36 vorhanden sind, die jeder Radbremse einzeln einen individuellen Bremsdruckverlauf zuordnen.

### Bezugszeichenliste

- 1: Bremsdruckgeber
- 2: Tandemhauptzylinder
- 3: Unterdruckverstärker
- 4: Druckstange
- 5: Bremspedal
- 6: Primärkolben
- 7: Schwimmkolben
- 8: Druckkammer
- 9: Druckkammer
- 10: Zentralregelventil
- 11: Zentralregelventil
- 12: Anschlußkanal
- 13: Anschlußkanal
- 14: Ringkammer
- 15: Ringkammer
- 16: Anschlußbohrung
- 17: Anschlußbohrung
- 18: hydraulische Leitung
- 19: hydraulische Leitung
- 20: Druckmittelvorratsbehälter
- 21: Hydraulikpumpe
- 22: Auslaßventil
- 23: Auslaßventil
- 24: Einlaßventil
- 25: Einlaßventil
- 26: Hydraulikpumpe
- 27: Absperrventil
- 28: Signalverarbeitungs- u. Verknüpfungsschaltung
- 29: Einlaßventil
- 30: Einlaßventil
- 31: Radbremse
- 32: Radbremse
- 33: Radbremse
- 34: Radbremse
- 35: Auslaßventil
- 36: Auslaßventil
- 37: Rückflußleitung
- 38: Rückschlagventil
- 39: Rückschlagventil
- 40: Druckmittelbehälter
- 41: Rückschlagventil
- 42: Rückschlagventil
- 43: Rückschlagventil
- 44: Rückschlagventil
- 45: Einströmleitung
- 46: Einströmleitung
- 47: Zweigleitung
- 48: Zweigleitung
- 49: Zweigleitung
- 50: Zweigleitung
- 51: Bremsleitung
- 52: Bremsleitung
- 53: Bolzen
- 54: Bolzen
- 55: Überdruckventil
- 56: Kolbensystem
- 57: Kolbensystem
- 58: Kolbensystem
- 59: Kolbensystem
- 60: Verbindungsleitung
- 61: Absperrventil
- 62: Pumpe
- 63: Überdruckventil
- 64: ABS-Pumpe
- 65: ABS-Pumpe
- 66: Pumpe
- 67: Absperrventil
- 68: Niederdruckspeicher
- 69: Niederdruckspeicher
- 70: Pumpe
- 71: Saugventil
- 72: Verbindung
- 73: Bremskraftregler
- 74: Bremskraftregler
- 75: Trennventil
- 76: Trennventil

## Patentansprüche

1. Kraftfahrzeugbremsanlage mit bremsschlupf- und antriebsschlupfabhängiger Regelung des Bremsdruckes,
mit vier Räder zugeordneten Radbremszylindern,
mit einem Tandemhauptzylinder (2),
mit einem Primärbremskreis der an die erste (8) von zwei mittels eines Schwimmkolbens getrennten Druckkammern (8,9) des Tandemhauptzylinders (2) angeschlossen ist und einem Sekundärbremskreis, der an die zweite Druckkammer (9) angeschlossen ist, wobei bei einer Pedalbremsung in der ersten Druckkammer (8) sowie im daran angeschlossenen Primärbremskreis (I) über eine fußkraftgesteuerte Betätigungsvorrichtung (1) Druck aufgebaut wird und in der zweiten Druckkammer (9) sowie im daran angeschlossenen Sekundärbremskreis (II) über den vom Druck der ersten Kammer (8) beaufschlagten Schwimmkolben (7),
mit mindestens einem Druckmittelvorratsbehälter (20), der mit beiden Druckkammern (8,9) des Tandemhauptzylinders (2) verbunden ist, wobei die Verbindung der ersten Druckkammer (8) zum Druckmittelvorratsbehälter (20) pedalwegabhängig und die Verbindung der zweiten Druckkammer (9) zum Druckmittelvorratsbehälter (20) abhängig vom Schwimmkolbenweg sperrbar sind,
mit mindestens einer fußkraftunabhängig arbeitenden, druckverändernden Einrichtung (26,62,66), die zur bremsschlupfabhängigen Regelung des Bremsdruckes beiträgt,
wobei daß in der Verbindung (18,60,72) des Druckmittelvorratsbehälters (20) zur ersten Druckkammer (8) des Tandemhauptzylinders (2) zusätzlich ein Absperrventil (27,61,67) angeordnet ist, welches während einer Antriebsschlupfregelung die Verbindung (18,60,72) sperrt, und die Verbindung (19) des Druckmittelvorratsbehälters (20) zur zweiten Druckkammer (9) kein solches Ventil aufweist, und wobei der Schwimmkolben (7) vom mittels einer fußkraftunabhängig arbeitenden Einrichtung (26,62,66) im Primärbremskreis (I) aufgebauten Druck zur zweiten Kammer (9) hin verschoben wird und dabei die wegabhängig sperrbare Verbindung der zweiten Kammer (9) zum Druckmittelvorratsbehälter (20) sperrt und den Druckverlauf im Sekundärbremskreis (II) entsprechend dem Druckverlauf im Primärbremskreis (I) regelt, dadurch gekennzeichnet daß der Primär- (I) und der Sekundärbremskreis (II) jeweils an mindestens einen, einem angetriebenen Rad zugeordneten Radbremszylinder (31,32,33,34) angeschlossen sind.

2. Kraftfahrzeugbremsanlage nach Anspruch 1, dadurch **gekennzeichnet**, daß in der Verbindung (18,60,72) des Druckmittelvorratsbehälters (20) zur ersten Druckkammer (8) dem Absperrventil (27,61,67) ein Überdruckventil (55,63) parallelgeschaltet ist, welches zum Druckmittelvorratsbehälter (20) hin öffnet.

3. Kraftfahrzeugbremsanlage nach Anspruch 1 oder 2, dadurch **gekennzeichnet**, daß das Absperrventil (67) ein elektromagnetisch betätigtes 3/2-Wegeventil ist, das den Druckmittelsvorratsbehälter (20) in seiner Grundstellung mit der ersten Druckkammer (8) und in seiner Schaltstellung mit der Saugseite einer selbstansaugenden Pumpe (66) verbindet, deren Druckseite an den Primärbremskreis (I) angeschlossen ist.

4. Kraftfahrzeugbremsanlage nach einem der Ansprüche 1 oder 2, dadurch **gekennzeichnet**, daß das Absperrventil (61) ein elektromagnetisch betätigtes 3/2-Wegeventil ist, das in seiner Grundstellung den Druckmittelvorratsbehälter (20) und seiner Schaltstellung die Druckseite einer aus dem Druckmittelsvorratsbehälter (20) ansaugenden Pumpe (62) jeweils mit der ersten Druckkammer (8) des Tandemhauptzylinders (2) verbindet.

## Claims

1. An automotive vehicle brake system with brake-slip-dependent and traction-slip-dependent braking pressure control, including
wheel brake cylinders associated with four wheels,
a tandem master cylinder (2),
a primary brake circuit connected to the first (8) pressure chamber of two pressure chambers (8, 9) of the tandem master cylinder (2) isolated by a floating piston, and a secondary brake circuit which is connected to the second pressure chamber (9), wherein during a pedal braking operation pressure builds up in the first pressure chamber (8) and in the primary brake circuit (I) connected thereto via a foot-pressure-controlled actuating device (1) and in the second pressure chamber (9) and in the secondary brake circuit (II) connected thereto via the floating piston (7) applied by the pressure of the first chamber (8),
including at least one pressure medium storage reservoir (20) connected to the two pressure chambers (8, 9) of the tandem master cylinder (2), the connection between the first pressure chamber (8) and the pressure medium storage reservoir (20) being adapted to be shut in dependence on the pedal travel and the connection between the second pressure chamber (9) and the pressure medium storage reservoir (20) being adapted to be shut in dependence on the stroke of the floating piston,
including at least one pressure-varying device (26, 62, 66) working independently of the foot pressure and contributing to brake-slip-dependent braking pressure control,
wherein, in addition, a locking valve (27, 61, 67) is arranged in she connection line (18, 60, 72) between the pressure medium storage reservoir (20) and the first pressure chamber (8) of the tandem master cylinder (2), which locking valve shuts the connection line (18, 60, 72) during a traction slip control operation, while the connection line (19) between the pressure medium storage reservoir (20) and the second pressure chamber (9) has no such valve, and wherein the floating piston (7) is displaced towards the second chamber (9) by the pressure built up in the primary brake circuit (I) by a device (26, 62, 66) which operates independently of the foot pressure, and, while being displaced, controls the stroke-dependently lockable connection between the second chamber (9) and the pressure medium storage reservoir (20) and controls the pressure variation in the secondary brake circuit (II) in accordance with the pressure variation in the primary brake circuit (I), **characterized** in that the primary brake circuit (I) and the secondary brake circuit (II) are connected to at least one wheel brake cylinder (31, 32, 33, 34) associated with a driven wheel.

2. An automotive vehicle brake system as claimed in claim 1,
**characterized** in that, in the connection line (18, 60, 72) between the pressure medium storage reservoir (20) and the first pressure chamber (8), a pressure relief valve (55, 63) is connected in parallel with the locking valve (27, 61, 67), which pressure relief valve (55, 63) opens in the direction of the pressure medium storage reservoir (20).

3. An automotive vehicle brake system as claimed in claim 1 or in claim 2,
**characterized** in that the locking valve (67) is an electromagnetically operated 3/2-way valve connecting the pressure medium storage reservoir (20) with the first pressure chamber (8), when in its basic position, and with the suction side of a self-priming pump (66), when in its operating position, the delivery side of the pump communicating with the primary brake circuit (I).

4. An automotive vehicle brake system as claimed in either of claims 1 and 2,
**characterized** in that the locking valve (61) is an electromagnetically operated 3/2-way valve which, in its basic position, connects the pressure medium storage reservoir (20) and which, in its operating position, connects the delivery side of a pump (62) aspirating pressure fluid from the pressure medium storage reservoir (20) in either case with the first pressure chamber (8) of the tandem master cylinder (2).

## Revendications

1. Système de freinage pour véhicule automobile, à régulation de la pression de freinage en fonction du glissement de freinage et du glissement de traction, comprenant
- quatre cylindres de frein de roue associés à des roues,
- un maître-cylindre tandem (2),
- un circuit de frein primaire, qui est raccordé à la première (8) de deux chambres de pression (8, 9) du maître-cylindre tandem (2) qui sont séparées au moyen d'un piston flottant, et un circuit de frein secondaire qui est raccordé à la seconde chambre de pression (9), une pression s'établissant, lors d'un freinage au moyen de la pédale, dans la première chambre de pression (8) et dans le circuit de frein primaire (I) raccordé à cette première chambre, par l'intermédiaire d'un dispositif d'actionnement (1) commandé par la force appliquée au pied, ainsi que dans la seconde chambre de pression (9) et dans le circuit de frein secondaire (II) raccordé à cette seconde chambre, par l'intermédiaire d'un piston flottant (7) soumis à l'action de la pression de la première chambre (8),
- au moins un réservoir de stockage d'agent de pression (20), qui est relié à deux chambres de pression (8, 9) du maître-cylindre tandem (2), la liaison de la première chambre de pression (8) au réservoir de stockage d'agent de pression (20) pouvant être bloquée en fonction de la distance parcourue par la pédale et la liaison de la seconde chambre de pression (9) au réservoir de stockage d'agent de pression (20) pouvant être bloquée en fonction de la distance parcourue par le piston flottant,
- au moins un dispositif (26, 62, 66) modifiant la pression, qui fonctionne d'une manière ne dépendant pas de la force appliquée au pied et qui participe à la régulation de la pression de freinage en fonction du glissement de freinage,
tandis qu'il est en outre prévu, dans la liaison (18, 60, 72) du réservoir de stockage d'agent de pression (20) à la première chambre de pression (8) du maître-cylindre tandem (2), une valve de blocage (27, 61, 67) qui bloque la liaison (18, 60, 72) pendant une régulation du glissement de traction,
que la liaison (19) du réservoir de stockage d'agent de pression (20) à la seconde chambre de pression (9) ne comporte aucune valve de ce type,
et que le piston flottant (7) est déplacé vers la seconde chambre (9) par la pression établie dans le circuit de frein primaire (I) au moyen d'un dispositif (26, 62, 66) fonctionnant d'une manière indépendante de la force appliquée au pied, bloque alors la liaison de la seconde chambre (9) au réservoir de stockage d'agent de pression (20), laquelle peut être bloquée en fonction de la distance parcourue, et assure la régulation de la variation de pression dans le circuit de frein secondaire (II) d'une manière correspondant à la variation de pression dans le circuit de frein primaire (I),
caractérisé en ce que le circuit de frein primaire (I) et le circuit de frein secondaire (II) sont raccordés chacun à au moins un cylindre de frein de roue (31, 32, 33, 34) associé à une roue motrice.

2. Système de freinage pour véhicule automobile selon la revendication 1, caractérisé en ce qu'une valve de surpression (55, 63) est branchée en parallèle vis-à-vis de la valve de blocage (27, 61, 67) dans la liaison (18, 60, 72) du réservoir de stockage d'agent de pression (20) à la première chambre de pression (8), la valve de surpression (55, 63) s'ouvrant en direction du réservoir de stockage d'agent de pression (20).

3. Système de freinage pour véhicule automobile selon la revendication 1 ou 2, caractérisé en ce que la valve de blocage (67) est une valve à 3 voies/2 positions à commande électromagnétique qui, dans sa position de base, relie le réservoir de stockage d'agent de pression (20) à la première chambre de pression (8) et, dans sa position de commutation, relie ce réservoir au côté d'aspiration d'une pompe (66) à auto-amorçage dont le côté de refoulement est raccordé au circuit de frein primaire (I).

4. Système de freinage pour véhicule automobile selon l'une des revendications 1 et 2, caractérisé en ce que la valve de blocage (61) est une valve à 3 voies/2 positions à commande électromagnétique qui, dans sa position de base, relie le réservoir de stockage d'agent de pression (20) à la première chambre de pression (8) du maître-cylindre tandem (2) et, dans sa position de commutation, relie à cette première chambre de pression le côté de refoulement d'une pompe (62) qui permet une aspiration dans le réservoir de stockage d'agent de pression (20).
